## Europäisches Patentamt

## European Patent Office

## Office européen des brevets

(11) Veröffentlichungsnummer: **0 114 243**
**B1**

(12) **EUROPÄISCHE PATENTSCHRIFT**

(45) Veröffentlichungstag der Patentschrift:
03.09.86

(51) Int. Cl.⁴: **H 02 G 15/08,** H 01 R 4/70,
H 01 R 9/05

(21) Anmeldenummer: **83111684.3**

(22) Anmeldetag: **23.11.83**

(54) **Kabelverteiler, bzw. -abzweiger für Breitbandkommunikationskabel.**

(30) Priorität: **18.01.83 DE 3301361**

(43) Veröffentlichungstag der Anmeldung:
**01.08.84 Patentblatt 84/31**

(45) Bekanntmachung des Hinweises auf die Patenterteilung:
**03.09.86 Patentblatt 86/36**

(84) Benannte Vertragsstaaten:
**AT BE CH DE FR GB LI NL**

(56) Entgegenhaltungen:
**DE-A-3 124 374**
**DE-A-3 127 869**
**DE-C-3 024 038**
**FR-A-1 587 207**
**US-A-3 983 457**

(73) Patentinhaber: **ANT Nachrichtentechnik GmbH,**
**Gerberstrasse 33, D-7150 Backnang (DE)**

(72) Erfinder: **Peter, Eugen, Scheffelstrasse 18, D-7150**
**Backnang (DE)**
Erfinder: **Dyck, Claus, Dipl.- Ing., Im Heidewinkel**
**17, D-7150 Backnang (DE)**

(74) Vertreter: **Wiechmann, Manfred, Dipl.- Ing., ANT**
**Nachrichtentechnik GmbH Gerberstrasse 33,**
**D-7150 Backnang (DE)**

## Beschreibung

Die Erfindung betrifft einen Kabelverteiler, bzw. -abzweiger gemäß dem Oberbegriff des Patentanspruchs 1. Ein solcher Kabelverteiler, bzw. -abzweiger ist bekannt aus der DE-A- 3124 374.

Die Elektronikeinrichtungen von Kabelverteilern, bzw. -abzweigern für Breitbandkommunikationskabel sind zum Einbau in Schächte oder zur Erdverlegung von hochfrequenzdichten Gehäusen umgeben. Diese Gehäuse sind zum Schutz vor Feuchtigkeit von Thermoplastmuffen oder Schrumpfmuffen umschlossen, vgl. beispielsweise DE-A- 30 40 864 A1. Aus TELEFUNKEN Jahrbuch 75/76 Weitverkehr und Kabeltechnik, Seite 59, Zeichnung "Verteiler- bzw. Abzweigmodul in hochfrequenzdichtem Gehäuse" und Seite 63, Zeichnung "Abzweiger in Schraubklemmmuffe" geht hervor, die Innenleiter von Koaxialkabeln durch Schraubklemmelemente in den Gehäusen festzuschrauben und die Außenleiter über Schraubverbindungen oder Kabelschellen am Gehäuse zu befestigen. Diese Verschraubungen dienen neben der elektrischen Kontaktierung der Koaxialkabelleiter auch der Zugabfangung. Diese Art der Einführung der Kabelenden in das Gehäuse der Elektronikeinrichtungen erfordert einen hohen Arbeitsaufwand am Montageort. So müssen insbesondere die bereits fertig abgeglichenen Elektronikeinrichtungen zur Befestigung der Koaxialkabelleiter am Montageort geöffnet werden, was zu Verstimmungen führen kann. Auch kann durch unsachgemäßes Schließen des Gehäuses zumindest die HF-Dichtigkeit gemindert werden.

Beim Verzweiger gemäß DE-A- 3124 374 erfolgt die Kontaktierung zwischen Koaxialkabelaußenleiter und Gehäuse durch spezielle Klammern, klemmende Krallen, Bördelränder, gewellte Ringe, o.ä.. Diese Kontaktierungsmittel sind relativ starr und können u.U. die Koaxialkabel verletzen und deformieren, was die Hochfrequenzeigenschaften ungünstig beeinflußt. Zur Abdichtung gegen Längswanderung von Feuchtigkeit in den Verzweiger hinein wird der Kabelaußenmantel so abgesetzt, daß noch ein darunter liegender Teil des Außenleiters überschrumpft werden kann. Längswanderung von Feuchtigkeit innerhalb des Koaxialkabels, d.h. zwischen Dielektrikum und Außenleiter, sowie zwischen Dielektrikum und Innenleiter kann durch diese Maßnahme allein nicht verhindert werden.

Eine das Dielektrikum und den Außenleiter umschließende Dichtung bei einem Koaxialkabelverzweiger ist aus der DE-C- 3024 038 prinzipiell bekannt.

Außerdem ist es aus der US-A- 3,983,457 bei Koaxialkabelverzweigern bekannt, auf der die elektrischen Baugruppen tragenden Leiterplatte in Achsrichtung der Kabeleinführungsöffnungen Federklemmtulpen zur Aufnahme der Koaxialkabelinnenleiter vorzusehen.

Die prioritätsgleiche europäische Anmeldung 83 111 685.0 EP-A-114 244beschreibt ebenfalls einen Kabelverteiler, bzw. -abzweiger für Koaxialkabel, bei dem Baugruppen zur Signalverteilung in einem metallischen Gehäuse untergebracht sind, über das ebenso wie über die in das Gehäuse eingeführten Kabelenden eine bei Wärmeeinwirkung schrumpfende Umhüllung aufgebracht ist, wobei sich die das Gehäuse überragenden Zonen der Umhüllung vor der Montage noch im ungeschrumpften Zustand befinden.

Jener Kabelverteiler, bzw. -abzweiger ist dadurch gekennzeichnet, daß die das Gehäuse umgebende Zone der wärmeschrumpffähigen Umhüllung bereits vor der Montage aufgeschrumpft ist, daß dem Gehäuse pro einzuführendes Kabelende eine Einführungsfederklemmhülse zugeordnet ist, deren Innendurchmesser im gespannten Zustand dem Durchmesser des Koaxialkabelaußenleiters eines einzuführenden Koaxialkabels entspricht, daß die Einführungsfederklemmhülsen starr und elektrisch leitend mit dem Gehäuse verbunden sind, daß die Einführungsfederklemmhülsen lamellenartige Federkörbe in ihren dem Gehäuseinnenraum abgewandten Bereichen aufweisen, daß die Einführungsfederklemmhülsen in ihren dem Gehäuseinnenraum zugewandten Bereichen Durchmesserverkleinerungen aufweisen, derart, daß im Bereich der kleineren Durchmesser die Koaxialkabelinnenleiter noch frei hindurchführbar sind, daß in die Durchmesserübergangszonen der Einführungsfederklemmhülsen Feuchtigkeitsdichtungen eingebracht sind, und daß sich im Innern des Gehäuses fest verankerte konzentrisch zu den Einführungsfederklemmhülsen angeordnete Federklemmtulpen zur Aufnahme der Koaxialkabelinnenleiter befinden.

Aufgabe der vorliegenden Erfindung ist es, einen durch den Oberbegriff des Patentanspruchs 1 näher bezeichneten Kabelverteiler, bzw. -abzweiger so auszugestalten, daß die Koaxialkabelenden ohne Öffnen des Gehäuses kontaktiert werden können unter Gewährleistung der HF- und einer erhöhten Feuchtigkeitsdichtigkeit. Diese Aufgabe wird durch die Merkmale im kennzeichnenden Teil des Patentanspruchs 1 gelöst.

In den Unteransprüchen sind vorteilhafte Ausgestaltungen des Kabelverteilers, bzw. -abzweigers angegeben.

Die Vorteile der Erfindung sind insbesondere dadurch gegeben, daß keine Schraubanschlüsse, die einen hohen Montageaufwand bedingen, zur Befestigung und Kontaktierung der Koaxialleiter mehr nötig sind. Der Montageaufwand am Einsatzort beschränkt sich lediglich auf das Einschieben der abisolierten Kabelenden und das Aufschrumpfen des wärmeschrumpffähigen Formteils auf das Gehäuse und die Kabelaußenmäntel. Wie Untersuchungen zeigten, ist der Verband Kabelmantel/schrumpffähiges Formteil so fest, daß keine zusätzlichen Maßnahmen zur Zugabfangung der Kabel nötig sind. Das Gehäuse mit den fertig abgeglichenen Elektronikeinrichtungen braucht am Montageort nicht mehr geöffnet zu werden. Die beiden Gehäusehälften können bedarfsweise als Massenartikel mit einem einzigen Werkzeug hergestellt werden.

Anhand der Zeichnungen wird die Erfindung nun näher erläutert. Es zeigen

Fig. 1 eine Draufsicht auf eine Gehäusehalbschale,

Fig. 2 einen Längsschnitt durch eine Gehäusehalbschale im Bereich einer Kabeleinführungsöffnung,

Fig. 3 eine Seitenansicht zweier zusammengefügter Halbschalen,

Fig. 4 einen Teillängsschnitt durch zwei zusammengefügte Halbschalen mit montiertem Kabelende,

Fig. 5 eine Draufsicht auf eine Leiterplatte im Bereich einer Kabeleinführungsöffnung,

Fig. 6 einen Teillängsschnitt durch das zusammengefügte Gehäuse an einer Stelle, wo die Leiterplatte geklemmt ist und

Fig. 7 einen abgewickelLen Kontakt-Käfig.

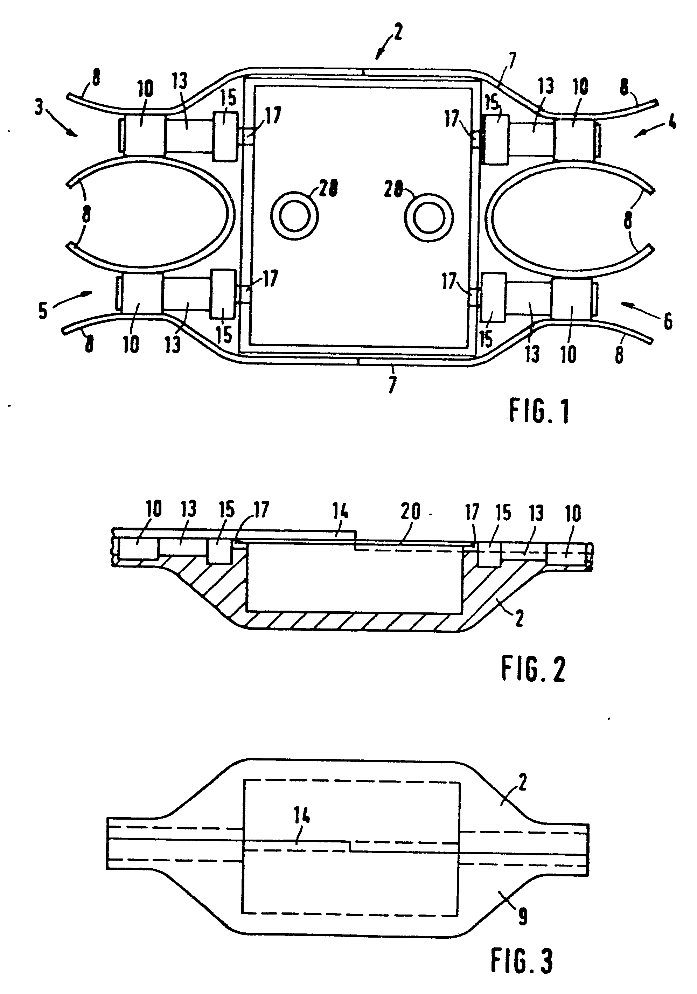

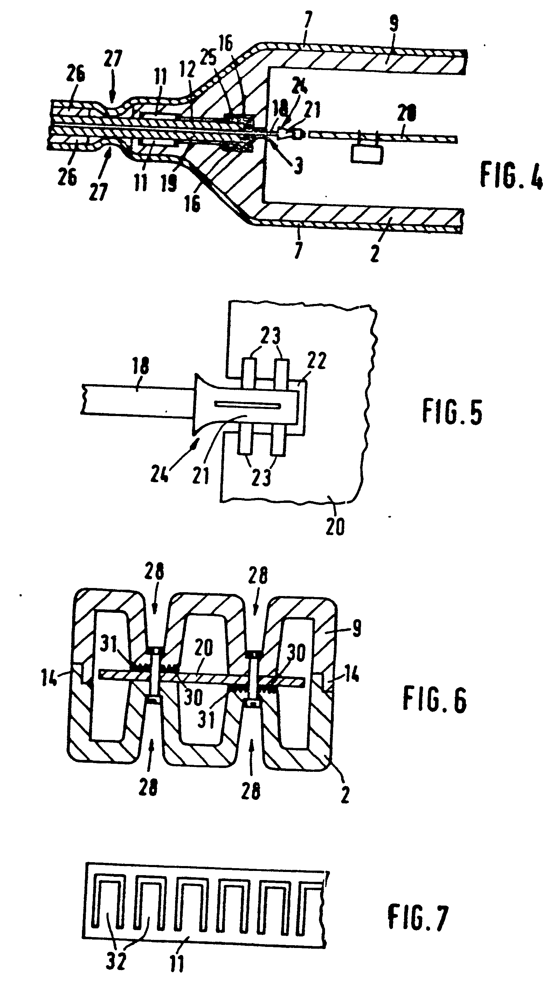

Das von zwei metallischen Halbschalen gebildete Kabelabzweigergehäuse 1, dessen eine Halbschale 2 schematisch in Fig. 1 dargestellt ist, weist vier Kabeleinführungsöffnungen 3, 4, 5, 6 auf. Die Kabeleinführungsöffnungen 3 und 4 sind für das Durchgangskabel vorgesehen und die Einführungsöffnungen 5 und 6 mit einem kleineren Durchmesser für je ein Abzweigkabel. In Fig. 1 sind also Kabeleinführungsöffnungen für 2 Abzweigkabel vorgesehen. Natürlich können Öffnungen für weitere Abzweigkabel vorgesehen sein, die entsprechend jeweils links und rechts parallel zu den Öffnungen des Durchgangskabels anzuordnen sind. Das Ausführungsbeispiel nach Fig. 1 zeigt ein Gehäuse auf das bereits ein schrumpffähiges Formteil 7 aufgeschrumpft ist. Die das Gehäuse überragenden Bereiche 8 des Formteils 7 werden erst nach der Montage der Koaxialkabelenden auf die Kabelaußenmäntel bzw. die Koaxialkabelaußenleiter aufgeschrumpft. Die Trennstelle zwischen den beiden Halbschalen 2 und 9 ist, wie die Figuren 1 bis 3 zeigen, so gewählt, daß die beiden Halbschalen 2 und 9 mit einem Druckgußwerkzeug hergestellt werden können, was die Herstellungskosten wesentlich reduziert. Im äußeren Bereich der Kabeleinführungsöffnungen 3, 4, 5 und 6 weisen die Halbschalen 2 und 9 Ausnehmungen 10 auf, in die Kontakt-Käfige 11 eingebracht werden, die sich beim Einschieben der abisolierten Kabelenden durch Federdruck gegen die Koaxialkabelaußenleiter drücken und so den elektrischen Kontakt zwischen den Koaxialkabelaußenleitern 12 und den metallischen Halbschalen 2 und 9 herstellen. Die in Richtung Gehäuseinnenraum an die Ausnehmungen 10 axial anschließenden Bohrungen 13, die wie die kreiszylinderförmigen Ausnehmungen 10 von den Halbschalen in axialer Richtung halbiert werden, sind im Durchmesser so gewählt, daß die abisolierten Koaxialkabelaußenleiter 12 gerade noch frei hindurchführbar sind. An diese Bohrungen 13 schließen sich axial in Richtung Gehäuseinnenraum kreiszylinderförmige Vertiefungen 15 an, in die Dichtungen 16 eingelegt werden zur Verhinderung des Eindringens von Feuchtigkeit parallel zur Längsachse der Einführungsöffnungen 3, 4, 5 und 6. Zwischen den Vertiefungen 15 und dem Gehäuseinnenraum sind die Kabeleinführungsöffnungen 3, 4, 5 und 6 im Durchmesser verkleinert, so daß die Koaxialkabelinnenleiter 16 berührungslos in den Gehauseinnenraum hindurchführbar sind. Die Halbschalen 2, 9 weisen Ansätze 14 auf, die sich jeweils punktsymmetrisch bis zur Mitte einer Halbschale 2, 9 hin ausdehnen. Natürlich können die beiden Halbschalen auch mit verschiedenen Werkzeugen hergestellt sein, so daß eine punktsymmetrische Gestaltung der Ansätze 14 nicht notwendig ist. Durch diese Ansätze 14 überlappen sich die Halbschalen 2 und 9 jeweils im Bereich der Trennstelle und sorgen für eine ausreichende Hochfrequenzdichtigkeit. Im Teillängsschnitt gemäß Figur 4 und in der Draufsicht gemäß figur 5 ist ein fertig montiertes und überschrumpftes Kabelende 19 zu sehen. Der Koaxialkabelaußenleiter 12 ist kontaktiert über den Kontakt-Käfig 11 das Gehäuse und der Koaxialkabelinnenleiter 18 wird in einer auf der Leiterplatte 20 befestigten Federklemmtulpe 21 fixiert. Die Federklemmtulpe 21 befindet sich in einer Ausnehmung 22 der Leiterplatte 20 und ist über vier Haltebeine 23, die gleichzeitig der Kontaktierung mit den Leiterbahnen auf der Leiterplatte 20 dienen, in der Leiterplatte 20 verankert. Die Federklemmtulpe 21 weist in Richtung zur Kabeleinführungsöffnung 3 einen Fangtrichter 24 zum leichteren Einführen des Koaxialkabelinnenleiters 18 auf.

Die Dichtungen 16 bestehen vorzugsweise aus weichelastischen Neopren-Ringen, die zylinderförmige Ansätze 25 aufweisen. Diese Ansätze 25 umgreifen das Ende des Koaxialkabelaußenleiters 12 und das Ende des Dielektrikums zwischen Koaxialkabelinnen- und -außenleiter und gewährleisten damit die Feuchtigkeitsdichtigkeit in Längsrichtung. Die Schutzmäntel 26 über den Koaxialkabelaußenleitern 12 werden soweit abgesetzt, daß der Außenleiter 12 im vollständig eingesteckten Zustand noch außerhalb des Gehäuses frei liegt. Das wärmeschrumpffähige Formteil 7 wird dadurch sowohl auf den Schutzmantel als auch in einer Zone 27 direkt auf den nicht ummantelten Koaxialkabelaußenleiter 12 aufgeschrumpft. Diese Maßnahme wirkt als Sperre für Feuchtigkeit, die zwischen Außenleiter 12 und Schutzmantel 26 in das Gehäuse eindringen könnte.

Die Längsabdichtung zwischen Koaxialaußenleiter 12 und Schutzmantel 26 kann auch durch folgende Maßnahme realisiert werden: Der Schutzmantel 26 wird so abgesetzt, daß nach der Montage ein Stück des Schutzmantels 28 in die Halbschalen 2, 9 mit hineinragt und eine im Gehäuse axial vor der Ausnehmung 10 befindliche weitere Abdichtung eingefügt wird, die eine Abdichtung zwischen Schutzmantel 26 und Koaxialaußenleiter 12 gewährleistet.

Im Teillängsschnitt gemäß fig. 6 ist dargestellt, wie die beiden Gehäusehalbschalen 2 und 9 zusammengefügt sind und die die Elektronikeinrichtungen tragenden Leiterplatten 20 eingeklemmt sind. Die Gehäusehalbschalen 2 und 9 weisen dazu paarweise Einschnürungen 28 in Form von Kegelstümpfen auf. Zwischen den Enden dieser Einschnürungen ist gerade so viel Platz, daß beim Zusammenfügen der Halbschalen eine Leiterplatte 20 eingeklemmt werden kann. Um die Halbschalen 2, 9 miteinander zu verschrauben oder vernieten zu können, sind in den Einschnürungen 28 axiale Bohrungen 29 vorgesehen. Ebensolche Bohrungen sind auf den Leiterplatten 20 an den gleichen Stellen vorgesehen. Zur Herstellung des elektrischen Kontaktes zwischen den über die Kontakt-Käfige 11 mit dem Gehäuse verbundenen Koaxialkabelaußenleitern 12 und den auf der Leiterplatte 20 befindlichen Leiterbahnen 30 sind die Enden der Einschnürungen 26 mit Messerkontakten 31 versehen, die sich beim Verschrauben oder Vernieten der Halbschalen 2 und 9 in die Leiterbahnen 30 eindrücken. Anstelle der Verschraubungen oder Vernietungen können die Halbschalen auch durch Spannbänder miteinander verbunden sein.

Ein Kontakt-Käfig 11, der in die Ausnehmungen 10 zur Kontaktierung des Außenleiters 12 gelegt wird, ist im abgewickelten Zustand in Fig. 7 dargestellt. Er besteht aus einem Band aus Federbronze, aus den Zungen 32 herausgestanzt sind. Die Zungen 32 sind leicht nach innen geneigt, damit sie den Außenleiter 12 kontaktieren. In den bisher gezeigten Ausführungsbeispielen wurde davon ausgegangen, daß die Leiterplatte 20 in der Mitte des Gehäuses 1 angebracht ist. Natürlich ist es auch möglich, die Leiterplatte 20 asymmetrisch im Gehäuse 1 unterzubringen, insbesondere dann, wenn Elektronikeinrichtungen zu nahe an die Gehäusewand zu liegen kommen würden oder wegen ihrer Abmessungen eine andere Gehäuseaufteilung gegeben erscheint.

Zweckmäßig ist es, die beiden Halbschalen 2 und 9 vor dem Überschrumpfen mit einer Aluminiumfolie zu umschließen. Diese Aluminiumfolie dient einerseits neben dem Gehäuse zur weiteren Abdichtung gegen Hochfrequenzeinstrahlung, bzw. Eigenstörstrahlung und andererseits zur Erleichterung des Wiederöffnens der Schrumpfmuffe, z.B. bei Erweiterung des Abzweigers. Bei fehlen der Aluminiumfolie könnte das schrumpffähige Formteil 7, bzw. der innenseitig darauf aufgetragene Schmelzkleber mit dem Gehäuse verkleben und so die Wiederverwendung des Gehäuses 1, erschweren.

**Patentansprüche**

1. Kabelverteiler, bzw. -abzweiger für Koaxialkabel, bei dem Baugruppen zur Signalverteilung in einem aus zwei metallischen Halbschalen (2, 9) bestehenden Gehäuse (1) untergebracht sind, über das ebenso wie über die in das Gehäuse (1) eingeführten Kabelenden (19) eine bei Wärmeeinwirkung schrumpfende Umhüllung (7) aufgebracht ist, wobei die Trennstelle zwischen den beiden Halbschalen (2, 9) die Kabeleinführungsöffnungen (3, 4, 5, 6) des Gehäuses (1) jeweils halbiert, wobei die Halbschalen (2, 9) im Bereich der Kabeleinführungsöffnungen (3, 4, 5, 6) Mittel zur Kontaktierung der Koaxialkabelaußenleiter (12) mit dem Gehäuse aufweisen, und wobei mindestens eine Abdichtung gegen Längswanderung von Feuchtigkeit in den Verzweiger hinein vorgesehen ist, dadurch gekennzeichnet, daß die Mittel zur Kontaktierung des Koaxialkabelaußenleiters (12) mit federnden Zungen versehene Kontakt-Käfige (11) sind, die sich im Bereich der Kabeleinführungsöffnungen (3, 4, 5, 6) in Ausnehmungen (10) der Halbschalen (2, 9) befinden, daß der die beiden Halbschalen (2, 9) umgebende Teil der bei Wärmeeinwirkung schrumpfenden Umhüllung (7) bereits vor der Kabelmontage aufgeschrumpft ist, daß in die Halbschalen (2, 9) im Bereich der Kabeleinführungsöffnungen (3, 4, 5, 6) zwischen den Ausnehmungen (10) für die Kontakt-Käfige (11) und dem Gehäuseinnenraum Vertiefungen (15) zur Einlage von als elastische Ringe mit zylinderförmigen Ansätzen (25) ausgebildeten Dichtungen (16) eingelassen sind, die den Koaxialkabelaußenleiter (12) und das Ende des Dielektrikums zwischen Koaxialkabelinnen- und -außenleiter umgreifen, und daß auf der/den die Baugruppen im Innern des Gehäuses (1) tragenden Leiterplatte/n (20) axial zu den Kabeleinführungsöffnungen (3, 4, 5, 6) angeordnete, mit Fangtrichtern (24) versehene Federklemmtulpen (21) zur Aufnahme der Koaxialkabelinnenleiter (18) vorgesehen sind.

2. Kabelverteiler, bzw. -abzweiger nach Anspruch 1, dadurch gekennzeichnet, daß die Innenseiten der Halbschalen (2, 9) derart gestaltet sind, daß die Leiterplatte/n (20) zwischen die Halbschalen (2, 9) einklemmbar ist/ sind.

3. Kabelverteiler, bzw. -abzweiger nach Anspruch 1, dadurch gekennzeichnet, daß die Halbschalen (2, 9) Ansätze (14) aufweisen, derart, daß sich die Halbschalen (2, 9) beim Zusammenfügen im Bereich der Trennstelle überlappen.

4. Kabelverteiler, bzw. -abzweiger nach Anspruch 1, dadurch gekennzeichnet, daß die Kabeleinführungsöffnungen (3, 4, 5, 6) der Halbschalen (2, 9) im Bereich zwischen den die Dichtungen (16) aufnehmenden Vertiefungen (15) und dem Gehäuseinnenraum Durchmesserverkleinerungen (17) aufweisen, die derart gewählt sind, daß die Koaxialkabelinnenleiter (18) berührungslos hindurchführbar sind.

5. Kabelverteiler, bzw. -abzweiger nach Anspruch 1, dadurch gekennzeichnet, daß die beiden Halbschalen (2, 9) über Schraub- oder Nietverbindungen zusammengefügt sind.

6. Kabelverteiler bzw. -abzweiger nach Anspruch 1, dadurch gekennzeichnet, daß die beiden Halbschalen (2, 9) über Spannbänder zusammengefügt sind.

7. Kabelverteiler, bzw. -abzweiger nach Anspruch 1, dadurch gekennzeichnet, daß um die Halbschalen (2, 9) vor dem Aufschrumpfen der Umhüllung (7) eine Metallfolie aufgebracht ist.

**Claims**

1. Cable distributor or cable branching joint, for co-axial cables, in which assemblies for signal distribution are housed in a housing (1), which consists of two metallic half shells (2, 9) and over which as well as over the cable ends (19) introduced into the housing (1) is applied a sheathing (7) shrinking under the effect of heat, wherein the separating place between both the half shells (2, 9) halves each of the cable introduction openings (3, 4, 5, 6) of the housing (1), wherein the half shells (2, 9) in the region of the cable introduction openings (3, 4, 5, 6) display means for bringing the outer co-axial cable conductor (12) into contact with the housing and wherein at least one seal is provided against longitudinal migration of moisture into the branching joint, characterised thereby, that the means for bringing the outer co-axial cable conductor (12) into contact are contact cages (11), which are provided with resilient tongues and disposed in recesses (10) of the half shells (2, 9), that that part of the sheathing (7) shrinking under the effect of heat, which surrounds both the half shells (2, 9), is shrunk on already before the assembly of the cable, that let into the half shells (2, 9) in the region of the cable introduction openings (3, 4, 5, 6) between the recesses (10) for the contact cages (11) and the interior housing space are depressions (15) for the laying-in of seals (16), which are constructed as elastic rings with cylindrically shaped projections (25), which embrace the outer co-axial cable conductor (12) and the end of the dielectric between the inner and the outer co-axial cable conductor and that tulip-shaped spring clamps (21), which are provided with catching funnels (24) and arranged axially to the cable introduction openings (3, 4, 5, 6), for the reception of the inner co-axial cable conductors (18) are provided on the conductor plate (20) or plates carrying the assembly or assemblies in the interior of the housing (1).

2. Cable distributor or cable branching joint according to claim 1, characterised thereby, that the inner sides of the half shells (2, 9) are structured in such a manner that the conductor plate (20) or plates is or are clampable between the half shells (2, 9).

3. Cable distributor or cable branching joint according to claim 1, characterised thereby, that the half shells (2, 9) display projections (14) in such a manner that the half shells (2, 9) on assembly overlap in the region of the separating place.

4. Cable distributor or cable branching joint according to claim 1, characterised thereby, that the cable introduction openings (3, 4, 5, 6) of the half shells (2, 9) in the region between the depressions (15) receiving the seals (16) and the interior housing space display diameter reductions (17), which are chosen in such a manner that the inner co-axial cable conductors (18) are feedable through free of contact.

5. Cable distributor or cable branching joint according to claim 1, characterised thereby, that both the half shells (2, 9) are put together by way of screw or rivet connections.

6. Cable distributor or cable branching joint according to claim 1, characterised thereby, that both the half shells (2, 9) are put together by way of tension bands.

7. Cable distributor or cable branching joint according to claim 1, characterised thereby, that a metal foil is applied around the half shells (2, 9) before the shrinking-on of the sheathing (7).

**Revendications**

1. Distributeur ou dérivation pour câbles coaxiaux, dans lequel les modules de distribution des signaux sont logés dans un coffret (1) constitué par deux flasques métalliques (2, 9) et sur lequel une enveloppe (7) rétractable à chaud est déposée, ainsi que sur les têtes de câble (19) introduites dans le coffret (1); le plan de joint des deux flasques (2, 9) divise en deux les orifices d'entrée de câble (3, 4, 5, 6) du coffret (1); les flasques (2, 9) comportent au voisinage des orifices d'entrée de câble (3, 4, 5, 6) des moyens de connexion entre les conducteurs extérieurs (12) de câble coaxial et le coffret; et une étanchéité au moins est prévue contre le cheminement longitudinal d'humidité dans la dérivation, ledit distributeur étant caractérisé en ce que les moyens de connexion du conducteur extérieur (12) de câble coaxial sont des cages de contact (11) comportant des languettes élastiques et logées dans des évidements (10) des flasques (2, 9), au voisinage des orifices d'entrée de câble (3, 4, 5, 6); la partie de l'enveloppe (7) rétractable à chaud et entourant les deux flasques (2, 9) est déjà rétractée lors du montage des câbles; des empreintes (15) sont réalisées sur les flasques (2, 9), au voisinage des orifices d'entrée de câble (3, 4, 5, 6) et entre les évidements (10) de logement des cages de contact (11) et l'intérieur du coffret, pour le logement de joints d'étanchéité (16) qui, realisés sous forme de bagues élastiques avec des saillies cylindriques (25), entourent le conducteur extérieur (12) du câble coaxial et l'extrémité du diélectrique entre les conducteurs intérieur et extérieur du câble coaxial; et des serre-câble élastiques (21), munis de trompettes (24), sont prévus sur la ou les cartes imprimées (20) portant le ou les modules à l'intérieur du coffret (1) suivant l'axe des orifices d'entrée de câble (3, 4, 5, 6), pour recevoir les conducteurs intérieurs (18) de câble coaxial.

2. Distributeur ou dérivation selon revendication 1, caractérisé en ce que les faces intérieures des flasques (2, 9) sont réalisées de façon à permettre le serrage de la ou des cartes iomprimées (20) entre les flasques (2, 9).

3. Distributeur ou dérivation selon revendication 1, caractérisé en ce que les flasques (2, 9) présentent des épaulements (14) tels que les flasques (2, 9) se recouvrent au voisinage du plan de joint lors de leur assemblage.

4. Distributeur ou dérivation selon revendication 1, caractérisé en ce que les orifices d'entrée de câble (3, 4, 5) des flasques (2, 9) présentent, dans la zone comprise entre les empreintes (15) contenant les joints d'étanchéité (16) et l'intérieur du boîtier, des diminutions de diamètre (17) telles que les conducteurs interieurs (18) de câble coaxial peuvent être introduits sans contact.

5. Distributeur ou dérivation selon revendication 1, caractérisé en ce que les deux flasques (2, 9) sont assemblés par vissage ou rivetage.

6. Distributeur ou dérivation selon revendication 1, caractérisé en ce que les deux flasques (2, 9) sont assemblées par des colliers de serrage.

7. Distributeur ou dérivation selon revendication 1, caractérisé en ce qu'une feuille métallique est déposée autour des flasques (2, 9) avant la rétraction de l'enveloppe (7).

FIG. 1

FIG. 2

FIG. 3

FIG. 4

FIG. 5

FIG. 6

FIG. 7